# EUROPEAN PATENT APPLICATION

(11) **EP 3 339 934 A1**
(43) Date of publication of application: **27.06.2018**
(21) Application number: 15901487.7
(22) Date of filing: 19.08.2015
(51) Int. Cl.: G02B 27/01

(54) **HEAD-MOUNTED ELECTRONIC DEVICE**

(71) Applicant: Shenzhen Royole Technologies Co., Ltd., Shenzhen, Guangdong 518172 (CN)
(72) Inventor: YANG, Songling, Shenzhen Guangdong 518052 (CN); CHEN, Songya, Shenzhen Guangdong 518052 (CN); JIANG, Chao, Shenzhen Guangdong 518052 (CN)
(74) Representative: Hamer, Christopher K.
(86) International application number: PCT/CN2015/087566
(87) International publication number: WO 2017/028283

(57) **Abstract**

A head mounted electronic device (10) includes a headphone (20) and a display portion (40). The headphone (20) includes an elastic belt (24) being of C-shape and having two coupling ends,(25) two movable members (26) each rotatably coupled to a corresponding coupling end (25) around a first axis (25d), and two speakers (22) each rotatably coupled to a corresponding movable member (26) around a second axis (26d). The display portion (40) includes a main body (42) to produce images and project the images outwardly, and two coupling members (44) coupled to two opposite ends of the main body (42) and each rotatably coupled to a corresponding speaker (22) around a third axis (22e). By setting the moveable members (26), during a rotation around the third axis (22e), the display portion (40) can enable the speaker (22) to rotate around the first axis (25d) and the second axis (26d), so that twisting of the elastic belt (24) and the coupling members (44) can be avoided, and the display portion (40) can be rotated to a position where the display portion (40) and the headphone (20) substantially overlap with each other.

## Description

### TECHNICAL FIELD

The present disclosure relates to head mounted electronic devices, and more particularly to a head mounted electronic device with a headphone and a display portion which are operable to rotate relative to each other.

### BACKGROUND

Head mounted electronic device is a near-eye display device. It produces images and projects the images to the eyes of a user, so that the user can see magnified images, and a display effect of large area can be obtained. Most of the existing head mounted electronic devices have their audio signals transmitted to the user via earplugs arranged thereon, but the acoustic effect obtained from the earplugs is not satisfactory. Thus, in view of the above, some products are provided with headphone jacks for the user to plug in headphones with desired acoustic effects. However, this solution makes it difficult to wear, and also inconvenient to carry the headphone and the head mounted electronic device separately.

### SUMMARY

In view of the above, embodiments of the present disclosure provide a head mounted electronic device with a headphone and a display portion which are operable to rotate relative to each other.

A head mounted electronic device includes a headphone and a display portion. The headphone includes an elastic belt which is of C-shape and includes two coupling ends, two movable members each rotatably coupled to a corresponding coupling end around a first axis, and two speakers each rotatably coupled to a corresponding movable member around a second axis. The display portion includes a main body to produce images and project the images outwardly, and two coupling members coupled to two opposite ends of the main body and each rotatably coupled to a corresponding speaker around a third axis.

In the present disclosure, by setting the moveable members, during a rotation around the third axis, the display portion can enable the speaker to rotate around the first axis and the second axis, so that twisting of the elastic belt and the coupling members can be avoided, and the display portion can be rotated to a position where the display portion and the headphone substantially overlap with each other.

### BRIEF DESCRIPTION OF THE DRAWINGS

The following accompanying drawings are used for illustrating embodiments of the present disclosure in detail in combination with specific embodiments. It should be understood that, components in the accompanying drawings do not represent actual sizes and proportion relationships, they are just to clearly illustrate the embodiments, and should not be understood as limitation to the present disclosure.
FIG. 1 is a structural view of a head mounted electronic device in accordance with an embodiment of the present disclosure, showing a headphone and a display portion in an unfolded state.
FIG. 2 is a partially exploded view of the head mounted electronic device of FIG. 1.
FIG. 3 is a front view of the head mounted electronic device of FIG. 1.
FIG. 4 is a side view of the head mounted electronic device of FIG. 1.
FIG. 5 is a structural view of the head mounted electronic device of FIG. 1, showing the headphone and the display portion in a folded state.

### DETAILED DESCRIPTION

In order to make the purpose, technical solution, and advantages of the present disclosure clearer, the following will further illustrate the present disclosure in combination with various embodiments and the accompanying drawings. It should be understood that, the specific embodiments described herein are only used for explaining the present disclosure, and are not used for limiting the present disclosure. In addition, the content shown in the accompanying drawings does not represent actual proportion relationships between components of the present disclosure, and are just for illustrating. It shall be pointed out that, in the present disclosure, the mentioned "connection" or "coupling" between two components may not be a direct connection, and also may be an indirect connection through a third component.

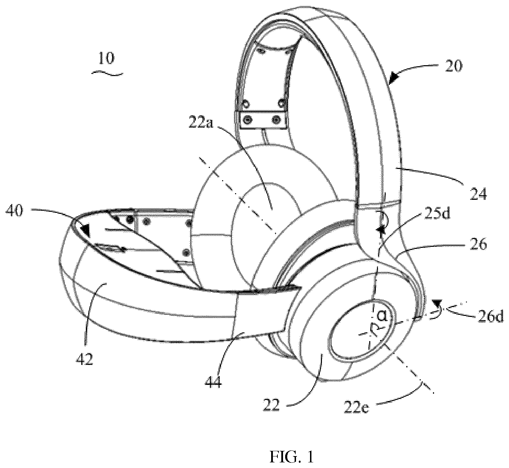

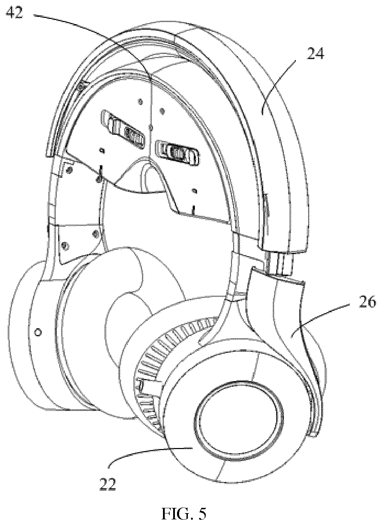

Referring to FIG. 1, FIG. 1 is a schematic view of a head mounted electronic device 10 in accordance with a first embodiment of the present disclosure. The head mounted electronic device 10 may be a head mounted videoplayer, a head mounted game machine, a head mounted navigator, etc.. The head mounted electronic device 10 includes a headphone 20 and a display portion 40. The display portion 40 is rotatably coupled to the headphone 20. Thus, when in use, the display portion 40 can be rotated to a position where an included angle defined between the display portion 40 and the headphone 20 is substantially 90 degrees, as illustrated by FIG. 1. At this point, after the user puts the headphone 20 on his/her head, the display portion 40 is located in front of his/her eyes and projects images to the eyes. When not being used, the display portion 40 can be rotated to a position where the display portion 40 substantially overlap with the headphone 20 to facilitate to store the head mounted electronic device 10, as illustrated by FIG. 5.

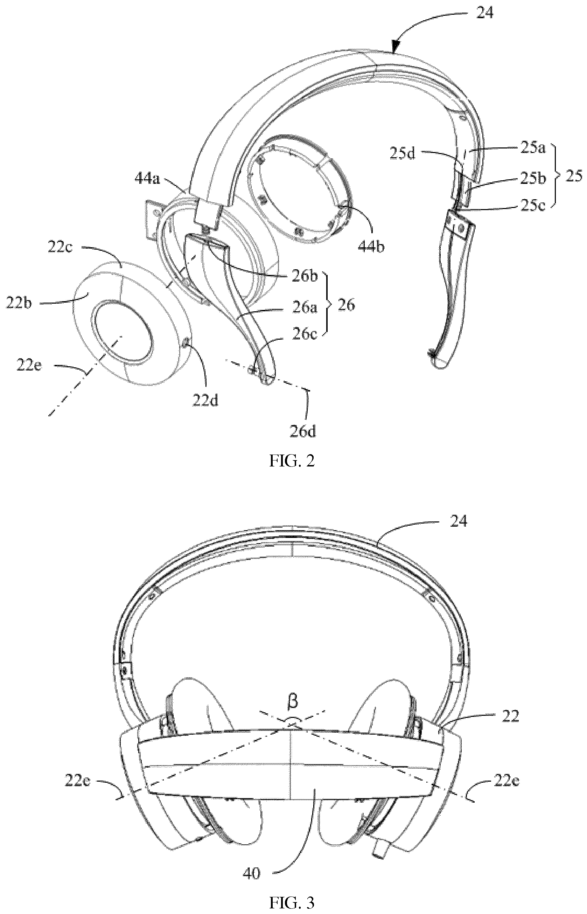

Specifically, referring to FIG. 1 and FIG. 2, the headphone 20 includes two speakers 22, an elastic belt 24, and two movable members 26 to rotatably couple the two speakers 22 to the elastic belt 24. The elastic belt 24 is substantially C-shaped and includes two coupling ends 25 located at a C-shaped opening. The elastic belt 24 can enable the two coupling ends 25 to get close to or away from each other. In the embodiment, each coupling end 25 includes a receiving part 25a and a first sliding member 25b slidably received in the receiving part 25a. A first protrusion post 25c extends from a side of the first sliding member 25b away from the receiving part 25a. The first sliding member 25b can be partially slid out of the receiving part 25a. The first protrusion post 25c defines a first axis 25d. The first sliding member 25b is arranged to allow the user to adjust a distance between the elastic belt 24 and the speaker 22. However, it can be understood that, when the elastic belt 24 is stretchable, or the distance between the elastic belt 24 and speaker 22 does not need to be adjusted, the first sliding member 25b can be omitted.

Each movable member 26 is rotatably coupled to a corresponding coupling end 25 around the first axis 25d, so that the movable member 26 can be rotated relative to the corresponding coupling end 25 with the first axis 25d as a rotation axis. In the embodiment, the movable member 26 is substantially curved in shape, and includes a curved main portion 26a, a first hole 26b inwardly concaved from an end of the main portion 26a adjacent to the coupling end 25, and a second protrusion post 26c extending from an opposite end of the main portion 26a and toward the speaker 22. The first protrusion post 25c is inserted and locked into the first hole 26b, so that the first protrusion post 25c can be rotated within the first through hole 25a.

Each speaker 22 is rotatably coupled to a corresponding movable member 26 around a second axis 26d, so that the speaker 22 can be rotated relative to the corresponding movable member 26 with the second axis 26d as a rotation axis. In the embodiment, each speaker 22 includes an inner wall 22a to transmit sound, an outer wall 22b opposite to the inner wall 22a, and a side wall 22c extending from a periphery of the outer wall 22b and toward the inner wall 22a. The outer wall 22b and the side wall 22c cooperatively define a cavity (not shown). The speaker 22 has a trumpet (not shown) located in the cavity, and a side of the trumpet producing sound faces the inner wall 22a. The side wall 22c defines a second through hole 22d. The second protrusion post 26c is inserted into the second through hole 22d and locked in the cavity, so that the speaker 22 can be rotated relative to the second protrusion post 26c, that is to say, the second protrusion post 26c defines the second axis 26d. The second axis 26d and the first axis 25d define a first included angle α therebetween. Thus, the speaker 22 and the movable member 26 can be rotated around the first axis 25d, and the speaker 22 can be further rotated around the second axis 26d, so that the moveable member 26 can be rotated in multiple dimensions. It should be pointed out that, the arrangement of the protrusion posts 25c, 26c and the recesses 26b and 22d can be reversed. For example, the movable members include the first protrusion posts 25c, and the two first recesses 26b are defined in the coupling ends 25.

The display portion 40 includes a main body 42 and two coupling members 44. The main body 42 is to produce images and project the images outwardly. Specifically, the main body 42 is provided with an image producing device and an optical module (not shown). Images produced by the image producing device are projected in preset directions by the optical module. The main body 42 is further provided with an adjusting mechanism (not shown). The adjusting mechanism is to adjust a distance between the image producing device and the optical module, to thereby fit near-sighted or far-sighted users. The adjusting mechanism can be further to adjust a distance between two combinations of the image producing devices and the optical modules, to thereby fit interpupillary distances of different users.

The two coupling members 44 are coupled to two opposite ends of the main body 42 and each is also rotatably coupled to a corresponding speaker 22 around a third axis 22e. The third axis 22e extends from the outer wall 22b of the speaker 22 and toward the inner wall 22a of the speaker 22. Thus, the display portion 40 can be rotated to a position where the display portion 40 is apart away from the headphone 20, as illustrated by FIG. 1, and a position where the display portion 40 and the headphone 20 substantially overlap with each other, as illustrated by FIG. 5. In the embodiment, the side wall 22c of the speaker 22 is a cylindrical wall. An end of the coupling member 44 adjacent to the speaker 22 is provided with a ring 44a. The ring 44a also has a cylindrical wall. The ring 44a is coupled to the side wall 22c of the speaker 22 by a clamping member 44b. Thus, the ring 44a can be rotated around a central axis of the side wall 22c. Thus, the side wall 22c of the speaker 22 defines the third axis 22e. The third axis 22e is substantially perpendicular to a corresponding first axis 25d and/or a corresponding second axis 26d.

As illustrated in FIG. 1, when the head mounted electronic device 10 is assembled and in use, without any external force, the display portion 40 can be rotated to the position where the included angle defined between the display portion 40 and the headphone 20 is substantially 90 degrees. It should be pointed out that, 90 degrees is just an example, and the degrees may be changed due to different wearing habits of users, for example, the included angle may be 70 degrees, 80 degrees, 100 degrees, or others. At this point, ends of the two speakers 22 away from the elastic belt 24 are inclined toward each other, as illustrated by FIG. 3. Thus, at this point the third axes 22e of the two speakers 22 define a second included angle β therebetween. The arrangement of the incline (that is, the second included angle β) can make the speakers 22 be more comfortable for ears.

Referring to FIG. 1 and FIG. 3, when it needs to rotate the display portion 40 to the position where the display portion 40 and the headphone 20 substantially overlap with each other, the display portion 40 is rotated in an upward direction as shown in FIG. 3. Because the third axis 22e is inclined relative to a horizontal direction in FIG. 3, and the main body 42 cannot be stretched, during the upward rotation of the display portion 40, the right speaker 22 shown in FIG. 1 and FIG. 3 are caused to rotate counterclockwise (shown by an arrow located at the second axis 26d in FIG. 1) around the second axis 26d. That is to say, a side of the right speaker 22 adjacent to the first hole 26b is rotated in a direction toward the other speaker 22. The other speaker 22 is rotated in an opposite direction. Also, the upward rotation of the display portion 40 further causes the right speaker 22 and the right coupling member 26 shown in FIG. 1 and FIG. 3 to rotate in a direction (shown by an arrow located at the first axis 25d) around the first axis 25d. That is to say, a side of the speaker 22 adjacent to the second protrusion post 26c is rotated in a direction away from the other speaker 22.

It can be known from the aforesaid description, in the embodiment, by setting the second included angle β, the speaker 22 is more comfortable for ears, to thereby provide better audio effect for users. However, since the third axis 22e is not horizontally arranged any more, i.e., the two third axes 22e are not collinear and define an included angle therebetween, the rotation of the display portion 40 relative to the headphone 20 becomes complicated. At this point, when the elastic belt 24 is directly fixed to the speakers 22, that is to say, when the movable members 26 are omitted, the elastic belt 24 and the coupling members 44 are twisted in rotation. However, in the embodiment, since the headphone 20 is provided with the movable members 26, the rotation of the speaker 22 along two dimensions permits the speaker 22 to rotate around the first axis 25d and the second axis 26d in the rotation when compelled by the movement of the display portion 40, to thereby avoid twisting the elastic belt 24 and the coupling member 44, and make the display portion 40 to rotate to the position where the display portion 40 and the headphone 20 substantially overlap with each other.

In the embodiment, the main portion 26a of the movable member 26 substantially extends about one quarter of a circle, that is to say, the first included angle α is approximately 90 degrees. However it can be understood that, under a circumstance that an included angle of other degrees is set, the speaker 22 can also be rotated along two dimensions to achieve the aforesaid purpose. Therefore, the first included angle α is not limited to 90 degrees. Preferably, the first included angle is larger than 30 degrees but less than 150 degrees, or is larger than 210 degrees but less than 330 degrees. At this point, a length of the main portion 26a can be accordingly changed.

In the embodiment, the second included angle β is substantially 150 degrees when the head mounted electronic device 10 is not subject to any external force. However it can be understood that, for different users, the degrees can be changed, so long as that the headphone 20 is more comfortable for ears. The second included angle β is preferably larger than 100 degrees but less than 170 degrees.

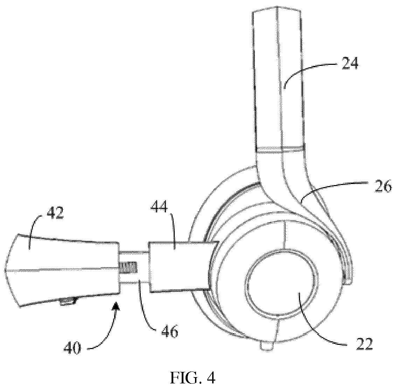

Preferably, each of the coupling members 44 can be parallelly coupled to the main body 42 or the speaker 22, so that each coupling member 44 can be moved to a first position adjacent to the main body 42 or the speaker 22 and moved to a second position away from the main body 42 or the speaker 22. Therefore, a distance between the main body 42 and user eyes can be adjusted. Specifically, referring to FIG. 4, take that the coupling member 44 is parallelly and movably coupled to the main body 42 for an example, the display portion 40 further includes supporting members 46 extending outwardly from two opposite ends of the main body 42, and the coupling member 44 can be slidably coupled to the supporting member 46, so that the main body 42 can be moved to be close to or away from the speakers 22. A manner in which the coupling member 44 is paralelly and movably coupled to the speaker 22 is similar to the structure connection principle of the aforesaid way, and will not be repeated herein.

In the description of the present disclosure, the "first", "second" are merely used for description, and cannot be understood to indicate or imply relative importance or implicitly indicate the number of the indicated technical features. Therefore, features with a limitation of "first" or "second" can explicitly or implicitly include one or more features. In the description of the present disclosure, "multiple" means two or more than two, unless there is a specific limitation.

In the description of the present disclosure, it should be noted that, unless explicitly stated or limited, the terms "mount", "connected" and "connection" should be broadly understood, for example, it may be a fixed connection, or may be a detachable connection, or an integral connection; it may be directly connected, or may be indirectly connected via intermediary, or may be communication between interiors of two elements or interactions between two elements. Those skilled in the art can understand the specific definition of above terms in the present disclosure according to specific conditions.

The foregoing description is only the preferred embodiments of the present disclosure, but is not intended to limit the present disclosure. Any modification, alternatives, improvements or the like within the spirit and principles of the present disclosure should be included in the protection scope of the present disclosure.

## Claims

1. A head mounted electronic device comprising a headphone and a display portion, **characterized in that** the headphone comprises:
an elastic belt being of C-shape and having two coupling ends;
two movable members each rotatably coupled to a corresponding coupling end around a first axis; and
two speakers each rotatably coupled to a corresponding movable member around a second axis, the second axis and the first axis defining a first included angle therebetween; and
the display portion comprises:
a main body operable to produce images and project the images outwardly; and
two coupling members coupled to two opposite ends of the main body and each rotatably coupled to a corresponding speaker around a third axis, the two third axes defining a second included angle therebetween.

2. The head mounted electronic device of claim 1, **characterized in that** each of the speakers comprises an inner wall to transmit sound and an outer wall opposite to the inner wall, a corresponding third axis extends from the inner wall and toward the outer wall.

3. The head mounted electronic device of claim 2, **characterized in that** the movable member comprises a first end rotatably coupled to a corresponding coupling end around the first axis, and a second end rotatably coupled to a corresponding speaker around the second axis, and a curved portion is arranged between the first end and the second end.

4. The head mounted electronic device of claim 3, **characterized in that** each of the two speakers further comprises a side wall extending from a periphery of the outer wall and toward the inner wall, the movable member is rotatably coupled to the side wall around the second axis.

5. The head mounted electronic device of claim 3 or claim 4, **characterized in that** each of the two coupling ends comprises one of a first protrusion post and a first recess, the first end of each of the two movable members comprises the other of the first recess and the first protrusion post, the first protrusion post is rotatably latched in the first recess, and the first axis is defined by the first protrusion post or the first recess.

6. The head mounted electronic device of claim 3 or claim 4, **characterized in that** each of the two speakers comprises one of a second protrusion post and a second recess, the second end of each of the two movable members comprises the other of the second recess and the second protrusion post, the second protrusion post is rotatably latched in the second recess, and the second axis is defined by the second protrusion post or the second recess.

7. The head mounted electronic device of claim 4, **characterized in that** the side wall of each of the two speakers is a cylindrical wall, the third axis is a central axis of the cylindrical wall, and the coupling member is rotatably coupled to the side wall along the third axis.

8. The head mounted electronic device of claim 7, **characterized in that** an end of each of the two coupling members adjacent to a corresponding speaker comprises a second cylindrical wall, the second cylindrical wall is coupled to the side wall of the corresponding speaker, so that the coupling member is operable to rotate around the third axis.

9. The head mounted electronic device of claim 1, **characterized in that** the third axis of each of the two speakers is substantially perpendicular to a corresponding first axis and a corresponding second axis.

10. The head mounted electronic device of claim 1, **characterized in that** the second included angle is larger than 100 degrees and less than 170 degrees.

11. The head mounted electronic device of claim 1 or claim 9, **characterized in that** the first included angle is larger than 30 degrees and less than 150 degrees.

12. The head mounted electronic device of claim 1, **characterized in that** each of the coupling members is parallelly and movably coupled to the main body or the speaker, so that each of the coupling members is operable to move to a first position adjacent to the main body or the speaker and move to a second position away from the main body or the speaker.

13. The head mounted electronic device of claim 1, **characterized in that** each of the two movable members is parallelly and movably coupled to the coupling end, so that each of the movable members is operable to be move to a first position adjacent to the elastic belt and move to a second position away from the elastic belt.
